Europäisches Patentamt

European Patent Office

Office européen des brevets

(11) Publication number: **0 101 718**
**B1**

(12) **EUROPEAN PATENT SPECIFICATION**

(45) Date of publication of patent specification: **07.05.86**

(51) Int. Cl.⁴: **G 06 F 9/42**

(21) Application number: **83901027.9**

(22) Date of filing: **15.02.83**

(86) International application number:
**PCT/US83/00193**

(87) International publication number:
**WO 83/03017 01.09.83 Gazette 83/20**

(54) **COMPUTER WITH AUTOMATIC MAPPING OF MEMORY CONTENTS INTO MACHINE REGISTERS.**

(30) Priority: **24.02.82 US 351656**

(43) Date of publication of application:
**07.03.84 Bulletin 84/10**

(45) Publication of the grant of the patent:
**07.05.86 Bulletin 86/19**

(84) Designated Contracting States:
**DE FR NL**

(56) References cited:
**EP-A-0 044 562**
**US-A-3 736 566**
**US-A-4 268 903**

**IBM Technical Disclosure Bulletin, vol. 15, no. 4, Sept. 1972, pp. 1100-1101**

(73) Proprietor: **Western Electric Company, Incorporated**
**222 Broadway**
**New York, NY 10038 (US)**

(72) Inventor: **DITZEL, David Roger**
**105 Mountain Boulevard**
**Watchung, NJ 07060 (US)**
Inventor: **McLELLAN, Hubert Rae, Jr.**
**4201 Summit Drive**
**Marietta, GA 30067 (US)**

(74) Representative: **Weitzel, David Stanley et al**
**Western Electric Company Limited 5, Mornington Road**
**Woodford Green Essex IG8 0TU (GB)**

Courier Press, Leamington Spa, England.

## Description

This invention relates to digital computers and, in particular, to the automatic allocation of machine registers.

Digital computers have for many years employed registers as the lowest level in the hierarchy of computer storage devices. Registers have faster access time than main memory, but, because of cost, are few in number. The use of registers was at one time controlled directly by the machine language programmer. The use of registers is now controlled principally by another computer program, the compiler. The compiler transforms an easier to understand high level source language into the lower level object language of the machine. Part of this transformation task performed by the compiler is to place currently active data items in registers as much as possible. In this fashion, references to main memory are reduced, leading to faster overall performance. This task, called register allocation, is burdensome to the compiler program, resulting in compilers that are large and complex, awkward to maintain, and costly to prepare.

Computer instructions specify the data operands to be used in an arithmetic or logical operation through the use of addressing modes. An address is the common term used to describe the location in storage of a particular piece of data or an instruction. An addressing mode may, for example, specify that the data is to be found in a register, at an address specified in the instruction, or at an address contained in a particular register specified in the instruction. A particularly common addressing mode, called "relative addressing" and found in many computers, is to form the address of an operand by adding the contents of a register to a constant specified in the instruction. This addressing mode is frequently used in the implementation of what is called a stack data structure. Because of this common use, the term "stack relative addressing" is frequently employed, and the particular register is called the stack pointer register.

Stack relative addressing is commonly used by compilers, using a data structure called a stack to allocate space in the computer's memory for local program variables, parameters, and temporary storage. Allocating space on a stack is advantageous because it provides a very simple and efficient technique for allocating space. The details of such a stack and how it is used by the compiler will not be discussed in more detail here; such details are common enough to be found in nearly any text on compiler design. One such book is "Principles of Compiler Design". by Messrs. A. V. Aho and J. D. Ullman, Addison-Wesley Publishing Co., (1977).

Local variables for a procedure (i.e. variables to be used only in that procedure) are usually allocated on a stack. A stack structure is described in US—A—4,268,903 for a computer with registers. It is the job of the compiler program to move variables from the main memory into registers whenever possible to improve computer speed. Such register allocation is a difficult task for a compiler program and often requires more than one pass through a source program to allocate registers efficiently. Furthermore, when one procedure is in the process of being executed and it is necessary to call another procedure, because the registers are limited in number, the contents of the registers must be saved in the main memory before the other procedure can be called. This process is called register saving. Similarly, registers must be restored when returning to the calling procedure. Compiler program design would be greatly simplified if such register allocation was not required.

Computers without registers already exist and are known as memory-to-memory computers. A computer without such registers, however, incurs a penalty of reduced execution speed.

In accordance with a preferred embodiment of the present invention as claimed, both the speed advantages of register-oriented computers and the compiler simplifications resulting from memory-to-memory oriented computers are realized in a single machine by providing a mechanism in which memory contents are automatically mapped into machine registers during program execution. This process called "binding", was preferably performed in the prior art during compilation of the program and not during execution.

In most cases, all local variables will be allocated to registers, providing a significant improvement over prior art compiler programs which assign only some of the local variables to registers. In addition, the present invention usually eliminates the need for register saving and restoring for procedure calls, required by prior art register oriented machines.

More particularly, as instructions are prefetched from the main computer memory, instructions are partially decoded before being placed in an instruction cache. As part of this decoding, operand identifiers with stack relative addresses, i.e. the value of a stack pointer plus an offset, are operated upon to form an absolute memory address. This memory address is stored in the instruction cache. These operand addresses in the instruction cache are checked to see if they fall within the range of addresses for which the corresponding data are currently stored in the register set. If so, then the addressing mode is changed so that the address may be used as a register index. In this fashion, registers are automatically allocated by hardware, rather than by traditional compiler methods.

A major advantage of the preferred embodiment is that the registers take the form of a circular buffer in order that the lower order bits of the absolute memory address can also be used as the register address in the buffer.

A computer in which registers are arranged in a stack to provide back up to main memory for enabling a process to be restarted from a checkpoint in the event of an error, is described in US—A—3,736,566.

IBM Technical Disclosure Bulletin, Vol. 15, No. 4, Sept. 1972, pages 1100 and 1101 describes a computer with slow and high speed (cache) stores. It has instruction prefetch and decode means for partial instruction decoding, which means are operative during execution of an object program for automatically (i.e. not during compilation) allocating variables from the slow main memory into the high speed cache stores. There is an instruction cache for receiving partially decoded instructions. Contrary to the present invention according to the IBM disclosure the high speed stores are not necessarily registers, and variables are always provided by the high speed cache stores. According to the present invention variables are allocated by the execution of a specific instruction (catch) in the instruction prefetch and decode unit.

The address mode is automatically adapted.

Fig. 1 is a block diagram of relevant parts of a digital computer and useful in describing the present invention;

Fig. 2 is a more detailed block diagram of the relevant parts of a digital computer disclosed in Fig. 1; and

Fig. 3 is a graphical representation of a stack frame of the main memory of the digital computer of Fig. 1.

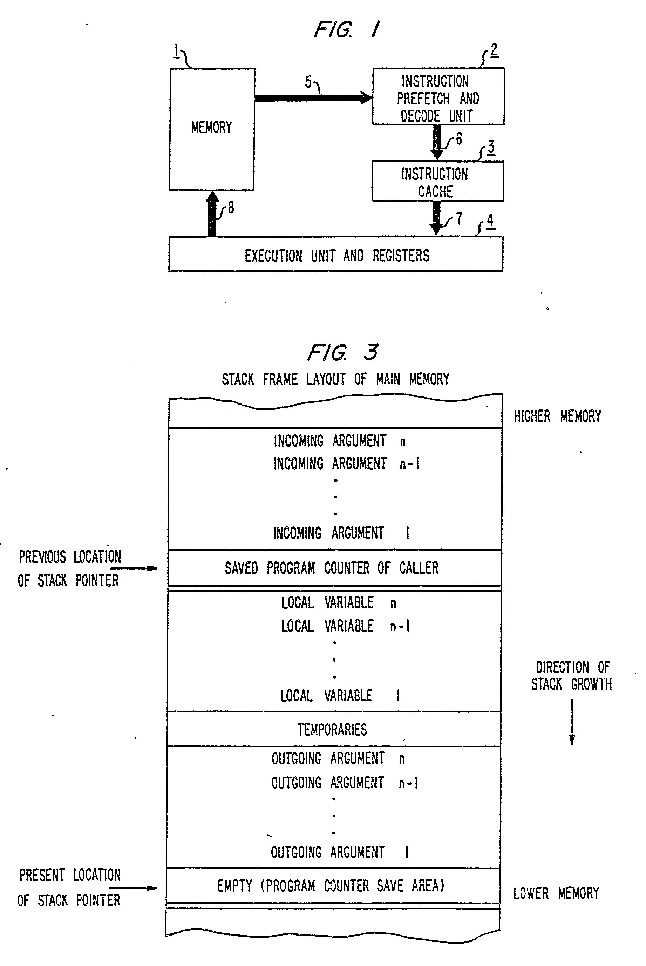

Referring to Fig. 1, there is shown a block diagram of the relevant parts of a digital computer which are useful in implementing the present invention. Data and instructions are stored in main memory 1. Data operands are fetched from memory 1 under control of the execution unit 4 over bus 8 and stored in the execution unit 4, to be described more fully below. Instructions are fetched from memory 1 over bus 5 by the instruction prefetch and decode unit 2. In accordance with the present invention, the instructions are partially decoded, as will be described more fully below, in the prefetch and decode unit 2. The partially decoded instructions are then placed in the instruction cache 3 over bus 6. From instruction cache 3, the partially decoded instructions are read by the execution unit 4 over bus 7. The instructions are executed in the execution unit 4 using the aforesaid operands.

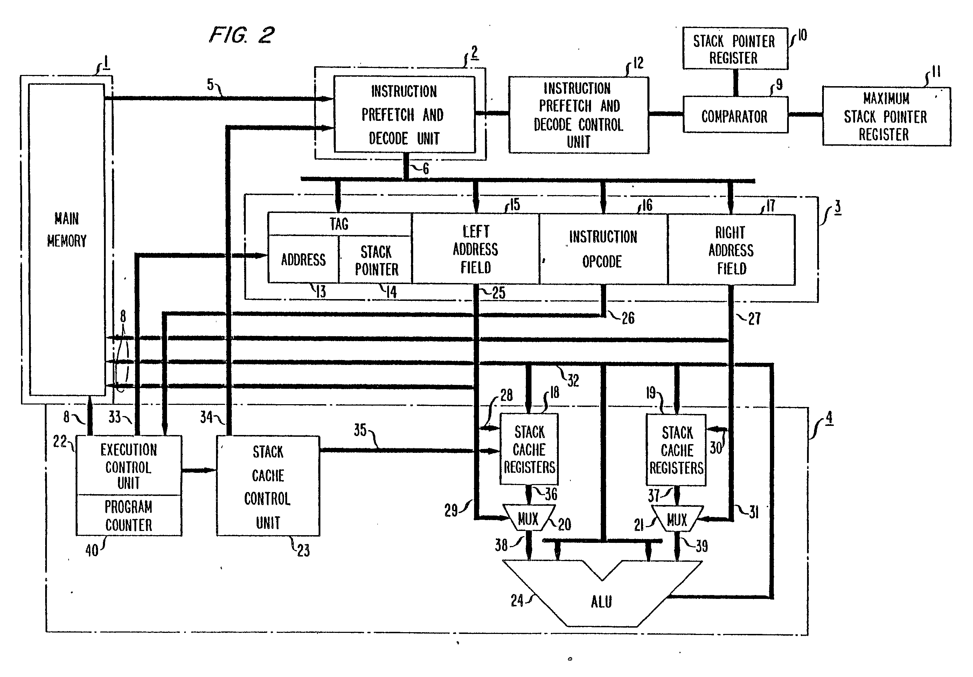

Referring to Fig. 2, there is shown a more detailed block diagram of the relevant parts of Fig. 1. Instructions are fetched from main memory 1 over bus 5 under control of the instruction prefetch and decode control unit 12 in association with instruction prefetch and decode unit 2. Stack pointer register 10 performs the traditional function of delimiting the boundary between free and used space in the allocation of program variables. Stack pointer register 10 with the maximum stack pointer register 11 also perform the functions of head and tail pointers, respectively, in implementing traditional circular buffers which contain the top data elements of the stack. The data for the circular buffers is contained in stack caches 18 and 19, these stack caches being memory register devices. Stack pointer in register 10 points to the lowest address of data currently maintained in stack caches 18 and 19. The maximum stack pointer in register 11 points to the highest address of data currently maintained in stack caches 18 and 19.

Instruction cache 3 is a conventional cache memory device which saves the most recently used instructions. The instruction cache 3 may hold many instructions, and for each instruction there exist several fields: the instruction opcode field 16, the left address field 15, the right address field 17, and the tag which is composed of the instruction address field 13 and the value of the stack pointer associated with the particular instruction 14. The left address field 15 and the right address field 17 hold the addresses for accessing the operands which may be sent to the left and right inputs, respectively, to the ALU 24. The addressing mode, e.g., main memory 1 or stack caches 18 and 19, of each operand is held in the instruction opcode field 16 of the cache. In most computers with a cache, a prefetch unit would fetch instructions from memory 1 and place them directly in instruction cache 3 without any intervening conversions. In accordance with the present invention, however, the prefetch and decode unit 2 will decode stack relative addressing modes before proceeding to place the instruction in instruction cache 3. This method is possible because the calling sequence and instruction set, as will be described more fully below, guarantee that the stack pointer in register 10 will not change except at procedure call and return.

When an instruction with a stack relative addressing mode is fetched by the prefetch and decode unit 2, the value of the stack pointer in register 10 is added to the value of the offset specified in the instruction to form the absolute memory address of the operand. This modified instruction, using the computed memory address of the operand, will be placed in the instruction cache 3 in the left or right address fields 15 or 17, respectively. When the prefetch and decode unit 2 converts a stack relative address to that of a memory address, that memory address is also checked to see if the data resides in the stack cache registers 18 and 19 or in main memory 1. This check is accomplished by comparing, in comparator 9, the memory address to the stack pointer in register 10 and the maximum stack pointer in register 11. If the memory address lies between the value of the stack pointer in register 10 and the value in maximum stack pointer register 11, inclusive, then the data will be resident in stack caches 18 and 19 and the addressing mode of the instruction is changed to the register addressing mode. If the memory address does not lie between the address of the stack pointer 10 and the maximum stack pointer 11, inclusive, then the data will be resident in main memory 1, and the addressing mode of the instruction is changed to main memory address mode.

Under control of execution control unit 22, such as a programmable logic array, instructions from instruction cache 3 are transmitted to the execution unit 4. More particularly, the left operand for the arithmetic and logic unit 24 is obtained by addressing memory over bus 25. If the addressing mode of the left operand is that of a main memory address, then the address sent over bus 25 will cause main memory 1 to send the requested operand to the left ALU input over bus 32. If the addressing mode of the left operand is that of a register, then the low order bits of the word part of the address from bus 25 is sent to stack cache registers 18 over bus 28 and the data is presented on bus 36. The word part of the address is that part which contains no bits for addressing bytes within a memory word. The exact number of lines of bus 28 for the low order bits of the word part of the address from bus 25 is the base two logarithm of the number of the stack cache registers 18. The size of registers 18 and 19 should be a power of two. For example, if 1024 registers were to be provided, then bus 28 would consist of 10 signal lines.

The use of the same address for both stack caches 18 and 19, and main memory 1 is a distinct advantage of the present invention because no intervening conversions are necessary which would cause loss of efficiency. In accordance with the present invention, thus, the address on bus 28 functions as an automatically computed register address to registers 18. Byte addressing, for example with a four byte wordsize, is provided by sending the low two bits of the byte address from bus 25 to multiplexer 20 over bus 29. In this fashion, full words, half-words, or bytes may be read, though full words and half-words may not cross word boundaries. Multiplexor 20 provides the necessary alignment and sign extension of operands for byte addressing.

Pursuant to register mode addressing, the data is supplied to the left ALU input over bus 38. Similarly, the right operands are developed in a symmetric fashion to the left operands with registers 19, multiplexor 21, busses 30 and 31. The advantage of duplicating the registers 18 and 19, and the multiplexors 20 and 21, resides in permitting faster access to both left and right ALU operands through parallelism. When the ALU 24 has computed the result, the result is sent via bus 32 back to either registers 18 and 19 or to main memory 1, in accordance with the addressing mode specified for the destination.

Execution control unit 22 operates based upon the value of the program counter 40 and the instruction presented on bus 26. The logically sequential instruction from the instruction cache 3 is requested from execution control unit 22 over bus 33.

Unlike traditional caches, the registers in stack cache 18 and 19 hold contiguous words of memory, and are far less costly to implement in terms of complexity and circuit density than traditional caches. Re-entrancy for cached instructions is guaranteed by including the stack pointer in field 14 and the instruction address in field 13 as part of the tag in the instruction cache 3.

Instruction set

Four program instructions must be used for maintaining the stack cache registers 18 and 19: CALL, RETURN, ENTER, and CATCH. Of all machine instructions, only ENTER and RETURN are allowed to modify the stack pointer in register 10.

The CALL instruction takes the return address, usually, the value of the program counter 40, and saves it on the stack, then branches to the target address. For ease in visualization, a stack frame as used in the present invention is shown in Fig. 3.

The target of a CALL instruction is an ENTER instruction. The ENTER instruction is used to allocate space for the new procedure's stack frame by subtracting its operand, that is, the size of the new stack frame in machine words, from the stack pointer in register 10.

The RETURN instruction deallocates the space for the current stack frame by adding its operand to the stack pointer in register 10, then branching to the return address on the stack.

The CATCH instruction is always the next instruction executed following a RETURN instruction and is used to guarantee that the stack cache registers 18 and 19 are filled at least as deep as the number of entries specified by the operand of the CATCH instruction.

ENTER and CATCH instructions are also used to handle the cases where the registers of stack caches 18 and 19 are not large enough to hold the entire stack. When a procedure is entered, the ENTER instruction attempts to allocate a new set of registers in the stack caches 18 and 19 equal to the size of the new stack frame. If free register space exists in the stack caches 18 and 19 for the entire new stack frame, all that needs be done is to modify the stack pointer in register 10.

If there exists insufficient free space to hold the entire new stack, the entries nearest the address pointed to by the maximum stack pointer in register 11 of stack caches 18 and 19 are flushed back to memory 1 over bus 32 under the control of stack cache control unit 23. When the size of the new stack frame is less than the size of stack caches 18 and 19, only the size of the new stack frame minus the number of free entries must be flushed back to memory 1. When the size of the new stack frame is greater than the size of the entire stack cache 18 or 19, all active entries then preexisting in stack cache registers 18 and 19 are flushed back to memory 1 under control of stack cache control unit 23 over bus 32. Furthermore, only the part of the new frame nearest the address pointed to by the stack pointer in register 10, that is, the top entries, is kept in the stack caches 18 and 19.

Upon procedure return, it is not known how many entries from stack caches 18 and 19 had to be flushed to memory 1 since the call. Accordingly, some entries may need to be restored from memory 1. The argument of the CATCH instruction specifies the number of entries from stack cache 18 and 19 that must be available therein before the flow of execution can resume.

The use of the CATCH instruction is the guarantee that stack cache references can be bound to register numbers and accessed as would be traditional registers without having to check to see if the data is actually resident in the stack caches 18 and 19. Unlike normal caches, but like general purpose registers, a stack cache reference will never miss. An advantage of the present invention is that the access time of stack cache registers 18 and 19 will be substantially equal to that of registers in a general register machine (not shown).

The phrase 'stack cache' has been used, as described above, to name the circular buffer registers 18 and 19 because of the early binding of stack offsets and in assigning register numbers automatically. There is no restriction from using a similar mechanism to "cache" any other particular piece of memory. Substantial benefits can be gained from allocating a small number of registers for global variables.

That is, in addition to registers in stack caches 18 and 19 used for local variables, similar registers (not shown) may be used for mapping therein global variables from the memory 1. These registers would cover a static area of memory and therefore not require the use of circular buffers. Even large programs tend to use relatively few scalar global variables; a small percentage of these account for most of the dynamic usage of global variables.

Making the internal machine registers, that is, registers 18 and 19, invisible to the compiler has several advantages. Object program code generation is considerably eased because no register allocation is required. As stated earlier herein, in many cases only a single one pass compiler is needed; a large optimizing compiler requiring several passes is not required for the efficient allocation of local variables to registers. Because only a single pass compiler is required, the compiler will run faster. The compiler will be smaller and easier to write and thereby more likely to be free from "bugs".

A major architectural concern in designing a very large scale integrated (VLSI) microprocessor (not shown) is to reduce off chip memory access time. While switching speeds of individual transistors are increasing, the relatively constant off chip speeds will adversely affect any processor that has to make many external references. Improvements in processing technology will only make the gap wider. The reduction in memory references gained with the registers in stack caches 18 and 19 is particularly attractive for use with a VLSI processor. Because the registers are invisible to the compiler, implementations with different numbers of registers create no compatibility problems. As VLSI processing technology improves, more registers may be added to stack caches 18 and 19 without requiring a change in either the compiler or the set of instructions.

## Claims

1. A computer having a main memory (1) for holding variables in a stack (Fig. 3), characterised by machine registers (18, 19) providing a stack cache for holding variables, means (22) for automatically transferring said procedure variables between said main memory stack and said machine registers during the execution of an object program, means providing a stack pointer (10) and a maximum stack pointer (11) to delimit the lower and upper locations of storage within said machine registers (18, 19), means (2) for partially decoding instructions by adding offsets to said stack pointer, means (9) responsive to said stack pointer and said maximum stack pointer to ascertain whether storage for a procedure variable is in said main memory (1) or in said machine registers (18, 19); and means (2) to change the addressing mode of a partially decoded instruction to address the machine registers (18, 19) when the storage for a respective variable is ascertained to be in the registers.

2. A computer according to claim 1, wherein said stack cache comprises a circular buffer.

3. A computer according to claim 1 or 2 wherein the stack cache address comprises the low order bits of the address for said main memory.

4. A computer according to any preceding claim including means for flushing a plurality of variables from said stack cache to said main memory in response to a determination that the storage space required for said procedure variables exceed the available storage capacity of said stack cache.

5. A computer according to any preceding claim, including an instruction cache for storing said instructions.

6. A method of using machine registers for storing procedure variables, characterised by automatically transferring said procedure variables between a main memory stack and said machine registers during the execution of an object program, using a stack pointer (10) and a maximum stack pointer (11) to delimit the lower and upper locations of storage within said machine registers (18, 19), partially decoding instructions by adding offsets to said stack pointer, ascertaining responsive to said stack pointer and said maximum stack pointer, whether storage for a procedure variable is in said main memory (1) or in said machine registers (18, 19); and changing the addressing mode of a partially decoded instruction to address the machine registers (18, 19) when the storage for a respective variable is ascertained to be in the registers.

## Patentansprüche

1. Computer mit einem Hauptspeicher (1) zur Aufnahme von Prozedur-Variablen in einem Stapel (Fig. 3), gekennzeichnet durch Maschinenregister (18, 19), die einen Stapel-Notizblockspeicher zur Aufnahme von Variablen bilden, . eine Einrichtung (22) zur automatischen Übertragung der Prozedur-Variablen zwischen dem Hauptspeicherstapel und den Maschinenregistern bei der Ausführung eines Objektprogramms,

eine Einrichtung, die einen Stapelzeiger (10) und einen Maximalstapelzeiger (11) zur Abgrenzung der unteren und der oberen Speicherstelle in den Maschinenregistern (18, 19) liefert,

eine Einrichtung (2) zur partiellen Decodierung von Befehlen durch Addition von Versetzungen zum Stapelzeiger,

eine Einrichtung (9), die abhängig vom Stapelzeiger und vom Maximalstapelzeiger feststellt, ob Speicherraum für eine Prozedur-Variable im Hauptspeicher (1) oder in den Maschinenregistern (18, 19) vorhanden ist, und

eine Einrichtung (2), die die Adressierbetriebsweise eines partiell decodierten Befehls so ändert, daß die Maschinenregister (18, 19) adressiert werden, wenn festgestellt wird, daß der Speicherraum für eine bestimmte Variable sich in den Maschinenregistern befindet.

2. Computer nach Anspruch 1, bei dem der Stapel-Notizblockspeicher einen Ringpuffer umfaßt.

3. Computer nach Anspruch 1 oder 2, bei dem die Adresse des Stapel-Notizblockspeichers die niedrigstelligen Bits der Adresse für den Hauptspeicher umfaßt.

4. Computer nach einem der vorhergehenden Ansprüche mit einer Einrichtung, die eine Anzahl von Variablen als Überlauf aus dem Stapel-Notizblockspeicher zum Hauptspeicher überträgt, wenn festgestellt wird, daß der für die Prozedur-Variablen erforderliche Speicherraum die verfügbare Speicherkapazität des Stapel-Notizblockspeichers übersteigt.

5. Computer nach einem der vorhergehenden Ansprüche mit einem Befehls-Notizblockspeicher zur Speicherung der Befehle.

6. Verfahren zur Verwendung von Maschinenregistern für die Speicherung von Prozedur-Variablen, gekennzeichnet durch automatisches Übertragen der Prozedurvariablen zwischen einem Hauptspeicherstapel und den Maschinenregistern bei der Ausführung eines Objektprogramms,

Verwendung eines Stapelzeigers (10) und eines Maximalkstapelzeigers (11) zur Abgrenzung der unteren und der oberen Speicherstelle in den Maschinenregistern (18, 19), partielles Decodieren von Befehlen durch Addition von Versetzungen zum Stapelzeiger,

Feststellen abhängig vom Stapelzeiger und vom Maximalstapelzeiger, ob der Speicherraum für eine Prozedur-Variable im Hauptspeicher (1) oder in den Maschinenregistern (18, 19) vorhanden ist, und

Ändern der Adressierbetriebsweise eines partiell decodierten Befehls so, daß die Maschinenregister (18, 19) adressiert werden, wenn festgestellt wird, daß der Speicherraum für eine bestimmte Variable sich in den Maschinenregistern befindet.

**Revendications**

1. Un ordinateur ayant une mémoire centrale (1) destinée à conserver des variables dans une pile (figure 3), caractérisé par des registres de machine (18, 19) constituant une antémémoire de pile destinée à conserver des variables, des moyens (22) destinés à transférer automatiquement les variables de procédure entre la pile de mémoire centrale et les registres de machine pendant l'exécution d'un programme objet, des moyens définissant un pointeur de pile (10) et un pointeur de position maximale de pile (11), pour délimiter les positions d'enregistrement inférieure et supérieure dans les registres de machine (18, 19), des moyens (2) destinés à décoder partiellement des instructions en additionnant des déplacements au pointeur de pile, des moyens (9) qui fonctionnent sous la dépendance du pointeur de pile et du pointeur de position maximale de pile de façon à déterminer si une variable de procédure est enregistrée dans la mémoire centrale (1) ou dans les registres de machine (18, 19); et des moyens (2) destinés à changer le mode d'adressage d'une instruction partiellement décodée, afin d'adresser les registres de machine (18, 19) dans le cas de la détermination du fait qu'une variable respective est enregistrée dans les registres.

2. Un ordinateur selon la revendication 1, dans lequel l'antémémoire de pile consiste en une mémoire tampon circulaire.

3. Un ordinateur selon la revendication 1 ou 2, dans lequel l'adresse d'antémémoire de pile est constituée par les bits d'ordre inférieur de l'adresse pour la mémoire centrale.

4. Un ordinateur selon l'une quelconque des revendications précédentes, comprenant des moyens destinés à retourner un ensemble de variables de l'antémémoire de pile vers la mémoire centrale, sous l'effet de la détermination du fait que l'espace d'enregistrement exigé pour des variables de procédure dépasse la capacité d'enregistrement disponible de l'antémémoire de pile.

5. Un ordinateur selon l'une quelconque des revendications précédentes, comprenant une antémémoire d'instruction destinée à enregistrer les instructions.

6. Un procédé d'utilisation de registres de machine pour l'enregistrement de variables de procédure, caractérisé en ce que: on transfère automatiquement les variables de procédure entre une pile en mémoire centrale et les registres de machine pendant l'exécution d'un programme objet, on utilise un pointeur de pile (10) et un pointeur de position maximale de pile (11) pour délimiter les positions d'enregistrement inférieure et supérieure dans les registres de machine (18, 19), on décode partiellement des instructions en additionnant des déplacements au pointeur de pile, on détermine, sous la dépendance du pointeur de pile et du pointeur de position maximale de pile, si une variable de procédure est enregistrée dans la mémoire centrale (1) ou dans les registres de machine (18, 19); et on change le mode d'adressage d'une instruction partiellement décodée, de façon à adresser les registres de machine (18, 19) lorsqu'on a déterminé qu'une variable respective est enregistrée dans les registres.

## FIG. 1

## FIG. 3

STACK FRAME LAYOUT OF MAIN MEMORY

FIG. 2

0 101 718